# EUROPEAN PATENT APPLICATION

(11) **EP 2 009 597 A2**
(43) Date of publication of application: **31.12.2008**
(21) Application number: 08011072.9
(22) Date of filing: 18.06.2008
(51) Int. Cl.: G07C 9/00, G07F 17/12

(54) **Payment system for delivery services**

(30) Priority: 28.06.2007 US 823574
(71) Applicant: PITNEY BOWES INC., Stamford CT 06926-0700 (US)
(72) Inventor: Stemmle, Denis J., Stratford, CT 06614 (US); Sussmeier, John W., Cold Spring, NY 10516 (US); Miller, John P., Shelton, CT 06484 (US); Lee, David K., Monroe, CT 06468 (US)
(74) Representative: HOFFMANN EITLE

(57) **Abstract**

According to some embodiments a system and a method are provided to assign (201) a variable receptacle identifier to a mailbox, determine (202) the variable receptacle identifier assigned to a mailbox at the time of delivery, receive (203) delivery data regarding delivery of a mail piece to the mailbox at the time of the delivery, the delivery data including receptacle identification data, and compare (204) the receptacle identification data with the variable receptacle identifier determined as of the particular time. This technique may allow for automatic confirmation that the mail piece was delivered to, or, at least present at, the destination mailbox at the time of delivery claimed by the mail carrier this may provide enhanced capabilities for auditing performance by mail carriers.

## Description

Businesses that comprise multiple aspects of their industry (e.g. a vertical business model) will often separate into two or more businesses (e.g. a horizontal business model). For example, numerous computer companies originally built all the hardware for their computers and also developed the software to run on their computers. As the industry progressed, the computer business model has changed from a vertical model to a horizontal model and computer companies typically produce specific products related either to hardware or software but not both. Further, various elements of the hardware are now built by various companies. For example, keyboards, monitors, control boards, and CPU chips are all built by separate companies, and packaged together and marketed by yet a different company into conventional computer systems.

A similar conversion from a vertical business model to a horizontal business model is taking place in the postal industry. One such example is in Germany where Deutsche Poste has hired non- Deutsche Poste mail carriers, from a separate company to deliver a portion of the mail. The control of subcontractors is difficult and without substantial recourse and may therefore lead to unreliable postal delivery.

In one embodiment a method is provided to assign a variable receptacle identifier to a mailbox, determine the variable receptacle identifier assigned to a mailbox at the time of delivery, receive delivery data regarding delivery of a mail piece to the mailbox at the time of the delivery, the delivery data including receptacle identification data, and compare the receptacle identification data with the variable receptacle identifier determined as of the particular time. This technique may allow for automatic confirmation that the mail piece was delivered to, or, at least present at, the destination mailbox at the time of delivery claimed by the mail carrier this may provide enhanced capabilities for auditing performance by mail carriers.

In one embodiment, a system is disclosed. The system comprises a mail piece that includes a unique mail piece identifier, a mailbox comprising a receptacle identification data device to transmit receptacle identification data, a collection service to collect mail pieces, a sorting service to sort mail pieces, a delivery service to deliver mail pieces, a payment and verification service, and a scanning device to capture the delivery data, and to transmit the delivery data to the payment and verification service. The payment and verification service is to assign a variable receptacle identifier to a mailbox on a periodic basis, determine the variable receptacle identifier assigned to a mailbox as of a particular time, receive delivery data regarding delivery of a mail piece to the mailbox as of the particular time, the delivery data including receptacle identification data, and the unique mail piece identifier, and compare the receptacle identification data with the variable receptacle identifier determined as of the particular time.

Therefore, it should now be apparent that the invention substantially achieves all the above aspects and advantages. Additional aspects and advantages of the invention will be set forth in the description that follows, and in part will be obvious from the description, or may be learned by practice of the invention. Various features and embodiments are further described in the following figures, descriptions, and claims.

The accompanying drawings illustrate presently preferred embodiments of the invention, and together with the general description given above and the detailed description given below, serve to explain the principles of the invention. As shown throughout the drawings, like reference numerals designate like or corresponding parts.
FIG. 1 illustrates a system according to some embodiments.
FIG. 2 illustrates a method according to some embodiments.
FIG. 3 illustrates a system according to some embodiments.
FIG. 4 illustrates a mailbox according to some embodiments.
FIG. 5 illustrates a method according to some embodiments.
FIG. 6 illustrates a method according to some embodiments.

The several embodiments described herein are provided solely for the purpose of illustration. Embodiments may include any currently or hereafter-known versions of the elements described herein. Therefore, persons in the art will recognize from this description that other embodiments may be practiced with various modifications and alterations.

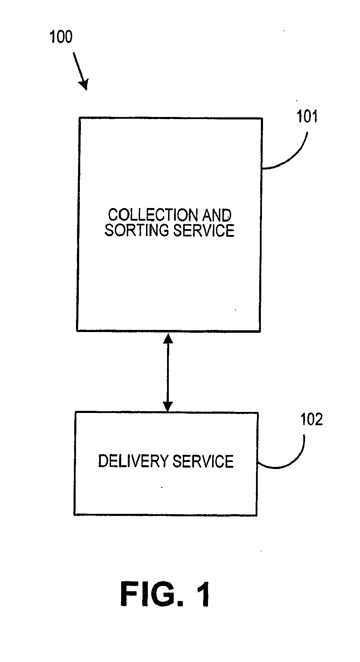

Now referring to FIG. 1, an embodiment of a system 100 is illustrated. System 100 may illustrate an embodiment of a deconstructed postal service comprising a collection and sorting service 101 and a delivery service 102. In the illustrated embodiment, a collection service and a sorting service may be a single entity that generates revenue by servicing a plurality of postal customers. However, in some embodiments the collection and sorting service 101 may be separate entities such as a separate collection service and a separate sorting service.

The collection and sorting service 101 may receive a plurality of mail pieces from one or more customers and/or may collect or pick up a plurality of mail pieces from one or more customers. A mail piece may be, but is not limited to, a letter, package, post card, or any object that can be delivered via a mail system. The collection and sorting service 101 may receive payment associated with the mail piece from the plurality of customers. For example, the collection service may provide stamps, packing material, shipping material, weigh packages, and perform other retail customer services. The collection service may also collect revenue via a postage meter system, by permit mailings, etc. Since the collection and sorting service 101 may need to ensure that each mail piece of the plurality of mail pieces has been sorted and delivered, a unique mail piece identifier may be assigned to each mail piece and a receptacle identifier may be assigned to a receptacle to which the mail piece will be delivered. A receptacle may be any item capable of storing or holding one or more mail pieces such as, but not limited to, a box, a mailbox, a mail slot, a metal or plastic container, or other any known receptacle to store or hold mail pieces. The receptacle identifier may be variable and may change on a periodic basis. In some embodiments, the mail piece identifier may be a PLANET code as currently practiced by the United States Postal Service, or an equivalent.

The collection and sorting service 101 may sort mail based on location of a mail recipient. For example, each mail piece may be sorted based on indications of destination on each mail piece such as, but not limited to, a zip code. After the collection and sorting service 101 has completed its function associated with each mail piece (e.g. the mail pieces are collected and sorted), the collection and sorting service 101 may forward the sorted mail pieces to a delivery service 102. In some embodiments the delivery service 102 may comprise one or more delivery services each associated with one or more delivery locations. In some embodiments the collection and sorting service 101 may comprise one or more delivery services each associated with one or more collection locations.

The delivery service 102 may receive each mail piece from the collection and sorting service 101 and once received, the delivery service 101 may deliver each mail piece associated with a customer's mailbox or receptacle. After the mail piece is delivered to the customer, an indication that the mail piece has been delivered may be sent to the collection and sorting service 101. In some embodiments, an indication may be, but is not limited to, a radio signal, a network packet, a scanned bar code, or a data file and may be sent via a network, a memory card, cellular technology, or other equivalents. In response to the indication, the collection and sorting service 101 may send a payment to the delivery service 102 based on the unique identifiers of the sorted mail pieces and the variable receptacle identifier.

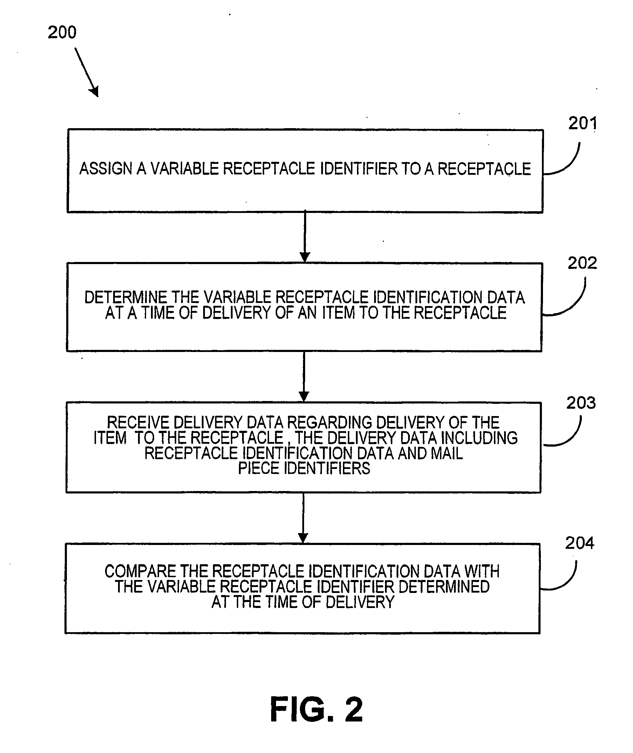

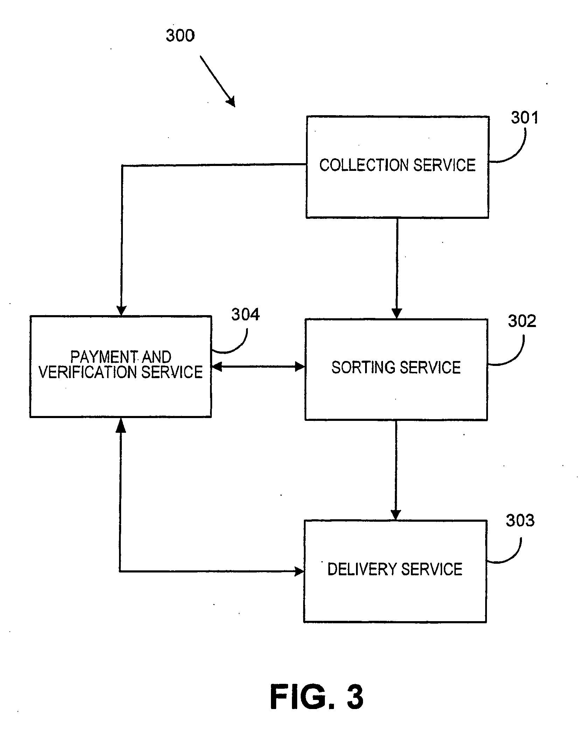

In some embodiments, and referring to FIG. 2, method 200 may verify delivery of a mail piece to a customer mailbox and may verify delivery to the correct or intended mailbox. The method 200 may be executed by any combination of hardware, software, and firmware, including but not limited to, the system 100 of FIG. 1 and system 300 of FIG. 3.

At 201 a variable receptacle identifier is assigned to a mailbox. The receptacle identifier may be changed on a periodic basis. Once assigned, each variable receptacle identifier may be input into a computer system for purposes of tracking. The variable receptacle identifier may be any code such as a bar code, an alphanumeric code or a numeric code. In some embodiments the variable receptacle identifier may be a code that changes on a periodic basis, such as, but not limited to, every day, every 12 hours, every hour, etc. In some embodiments, the variable receptacle identifier changes based on a predetermined pattern of changes. For example, a mathematical formula may be applied to the variable receptacle identifier so that a predictable code may be determined by a number of times that the mathematical formula has been applied. In some embodiments, the pattern may rotate or repeat periodically and may comprise a limited number of known patterns. In some embodiments, the code may be changed via a radio signal such that a mailbox display device may be synchronized with a computer system that stores the receptacle identifiers.

For illustrative purposes, and to aid in understanding features of the invention, an example will now be introduced. This example will be carried through the detailed description and this example is not intended to limit the scope of the invention. A company may want to mail an important letter to a client and may want to ensure that the letter is delivered. Since a collection service may be a separate entity from a delivery service, the collection service may want to ensure that the letter was delivered prior to paying the delivery service. Accordingly, when the letter arrives at the collection service it may be assigned a unique identifier before being sorted and sent to a delivery service for delivery. The mailbox of the client may be assigned a variable receptacle identifier. It will be understood that in the following examples, the letter may be any item for delivery such as a parcel, newspaper, or other mail item, and the mailbox may be any suitable receptacle for receiving the delivered item.

At 202, the variable receptacle identification data at a time of delivery of an item to the receptacle is determined. Continuing with the above letter example, at the time of delivery of the letter, a specific code may be determined for the variable receptacle identifier associated with the delivery time. For example, the code may be 123456789 at the delivery time but was 765432198 prior to the delivery time.

Next at 203, delivery data regarding delivery of the item to the receptacle is received, the delivery data including receptacle identification data and mail piece identifiers. In some embodiments, the delivery data may be transmitted by or downloaded from a scanning device or a scanning device system that may either optically scan or electronically receive the delivery data. The mail piece identifiers may be associated with the mail piece and in some embodiments each mail piece identifier may be associated with a delivery address. In some embodiments, each mail piece may be associated with a manifest comprising a plurality of mail piece identifiers and a unique manifest identifier.

Continuing with the above letter example, at the time of delivery of the letter, a mailbox associated with the recipient may be scanned to receive the variable receptacle identifier. For example, the code received may be 123456789 if the correct mailbox is scanned at the delivery time. Varying the receptacle identification code may deter the mail delivery person from faking the delivery by use of a previous code associated with the mailbox. In an alternative embodiment, an identifier may not be visible on the mailbox, but the physical location of the mailbox may be associated with a global position system ("GPS") code for the exact location of the mailbox. This GPS location data may be associated in a database maintained by a payment and verification service.

At 204 the receptacle identification data is compared with the variable receptacle identifier determined at the time of delivery. If the receptacle identification data matches the variable receptacle identifier for the particular time then a payment may be sent to a delivery service.

Since the variable receptacle identifier may be associated with the mail piece identifier, in some embodiments the payment may be sent only if both if the receptacle identification data matches the variable receptacle identifier for the particular time and the delivery data matches the associated mail piece identifier.

Continuing with the above letter example, at the time of delivery of the letter, if the code received is 123456789 (e.g. the variable receptacle identifier) and it matches a stored receptacle identification data, then a payment may be sent to the delivery service. The illustrated method may improve reliability of mail delivery.

Now referring to FIG. 3, an embodiment of a system 300 is illustrated. System 300 may illustrate an embodiment of a deconstructed postal service comprising a collection service 301, a sorting service 302, and a payment service 303, and a payment and verification service 304.

Like the collection and sorting service 101 of FIG. 1, the collection service 301 may receive a plurality of mail pieces from one or more customers, may collect or pick up a plurality of mail pieces from one or more customers, and may receive payment from the plurality of customers. In some embodiments, the collection service 301 and the payment and verification service 304 may be the same entity. The collection service 301 may forward the payment and unique identifiers to the payment and verification service 304. The payment and verification system 304 may verify that each mail piece reaches the sorting service 302 and the delivery service 303 and may distribute payment to the sorting service 302 when the sorting service 302 validates that each mail piece has been forwarded to the delivery service 303. In one embodiment, the collection service 301 may forward all of the received funds to the payment and verification service 304 and may receive a payment once each collected mail piece is sent to the sorting service 302. In some embodiments, the collection service 301 may keep a portion of the payments collected and may forward a remaining portion of the received funds to the payment and verification service 304.

Since the payment and verification service 304 may need to ensure that each mail piece of the plurality of mail pieces has been sorted and delivered, a receptacle identifier may be assigned to a mailbox to which the mail piece will be delivered. The receptacle identifier may be variable and may change on a periodic basis.

The sorting service 302 may receive the plurality of mail pieces from the collection service 301 and sort mail based on location of a mail recipient. After the sorting service 302 has completed sorting each mail piece, an indication may be sent to the payment and verification service 304 where the indication comprises unique identifiers of the sorted mail pieces or a manifest identifier associated with the sorted mail pieces. In response to the indication, the payment and verification service 304 may send a payment to the sorting service 302 based on the unique identifiers of the sorted mail pieces and, like the payment system of FIG. 1, the sorted mail pieces may be forwarded to the delivery service 303. Alternately, payment to the sorting service 302 may be forwarded by the payment and verification service 304 only after verification that the sorted mail pieces have been received by the delivery service 303. This verification may be a physical signature, a scan of a digital signature, or a scan of a variable identifier at a point of delivery to the delivery service 303, similar to that as described with respect to the mailbox of FIG. 1.

The delivery service 303 may receive each mail piece from the sorting service 302 and once received, the delivery service 303 may deliver each piece of mail to a customer's mailbox. After the mail piece is delivered to the customer, an indication that the mail piece has been delivered may be sent to the payment and verification service 304. In response to the indication, the payment and verification service 304 may send a payment to the delivery service 303 based on the unique identifiers of the delivered mail pieces.

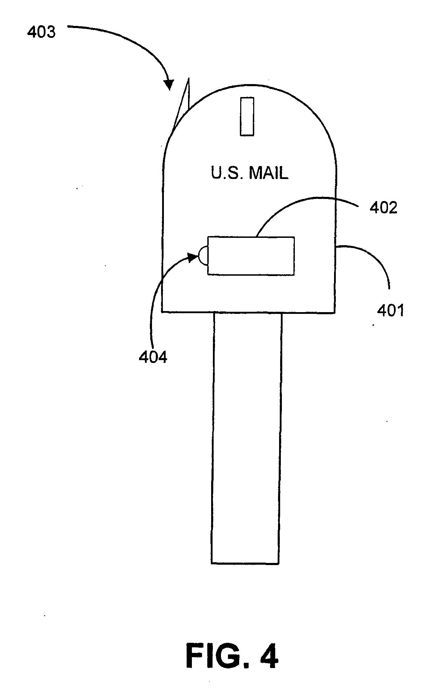

In embodiment of a mailbox is shown if FIG. 4. The mailbox may comprise a receptacle portion 401, an identification portion 402, a solar panel 403, and an antenna 404. The receptacle portion 401 may comprise any receptacle that may hold mail pieces. The identification portion 402 may be coupled to the receptacle portion 401 and may display or indicate a unique identifier associated with the mailbox. The identification portion 402 may change the identifier or may display a changed identifier on a periodic basis. In some embodiments, the identification portion 401 may indicate a different identifier every day. The identification portion 402 may comprise at least one of a radio frequency identification ("RFID) device, a variable bar code display device, or a variable alphanumeric code display device. The identification portion 402 may comprise an internal battery or may comprise an external power supply such as, but not limited to, a solar panel 403. The solar panel 403 may be coupled to the mailbox. One or more wires, which are not shown, may connect the solar panel to the identification portion 402 to supply power to the identification portion 402. The identification portion 402 may comprise a system to determine a variable receptacle identifier such as, but not limited to, receiving a signal via the antenna 404 or by applying a mathematical algorithm to a first code to create a predicted variable receptacle identifier.

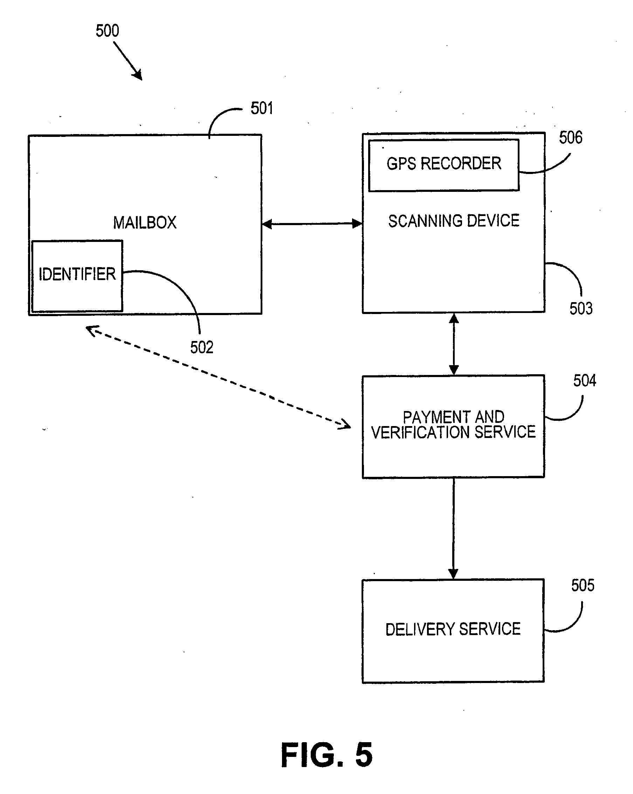

In some embodiments, the mailbox of FIG. 4 may be an element of a system such as system 500 of FIG. 5. System 500 may comprise a mailbox 501, a scanning device 503, a payment and verification service 504, a delivery service 505, and a global positioning system ("GPS") recorder. The mailbox 501 may comprise an identification portion 502 as described with respect to FIG. 4. In some embodiments, the payment and verification service 504 may be synchronized with the identification portion 502 so when a unique identifier associated with the identification portion 502 may change, a unique identifier associated with the customer's mailbox stored at the payment and verification service 504 will change.

The GPS recorder 506 may be associated with the scanning device 503 carried by a delivery person associated with the delivery service 505. In some embodiments the GPS recorder may be internal to the scanning device 503. When a mail piece identifier is scanned, the GPS recorder 506 may associate, and record the current GPS coordinates at a physical location where the scanning was conducted with the mail piece identifier as well as the time when the scanning occurred. A database maintained by the payment and verification service 504 (not shown) may associate GPS coordinates, such as a latitude and longitude, with each delivery destination. The scanned mail piece identifier along with the GPS coordinates at the time of the scanning may be used to confirm that the delivery person was physically located at an intended destination address with the item to be delivered by comparing the recorded GPS coordinates with the stored GPS coordinates for that destination in the database. This information may be used by the payment and verification service to confirm that the intended delivery,was completed, and initiate payment for the delivery services.

The scanning device 503 may comprise a handheld device capable of capturing identification codes of the mailbox (e.g. a receptacle identifier or the physical location of the scanner at the time of the scanning) and the identifier on the mail piece to be delivered, such as by either optically scanning a bar code or an alpha-numeric code, receiving a radio signal, or recording the time and GPS coordinates at the time the mail piece identifiers are scanned. It may be appreciated that in some embodiments, the scanning device may be capable of capturing the physical location (e.g. a set of coordinates) associated with the scanner at the time of the scanning and that the receptacle identifier may be the set of coordinates associated with the physical location of the receptacle rather than a code physically displayed on the receptacle. The scanning device 503 may store scanned identification codes in a local memory, or a removable memory such as a memory card. In some embodiments, the scanning device 503 may be connected to a computer network, such as, but not limited to, a cellular based network or hardwired based network, or a radio transmitter, and may transmit stored identification codes to the payment and verification service 504. In some embodiments, the scanning device 503 may transmit identification codes in real time. In some embodiments, the scanning device 503 may transmit identification codes at a later time by any suitable method, such as but not limited to, a card reader, a direct connection to a local receiver, or by a wireless connection. The scanning device 503 may also scan mail piece identifiers from bar codes on the mail pieces delivered to the mailbox and may store and then transmit the mail piece identifiers along with a receptacle identifier. Alternatively, if the scanned receptacle identifier from the mailbox matches an expected receptacle identifier pre-stored in the scanning device, the scanning device may simply transmit the mail piece identifier alone to confirm delivery of the mail piece.

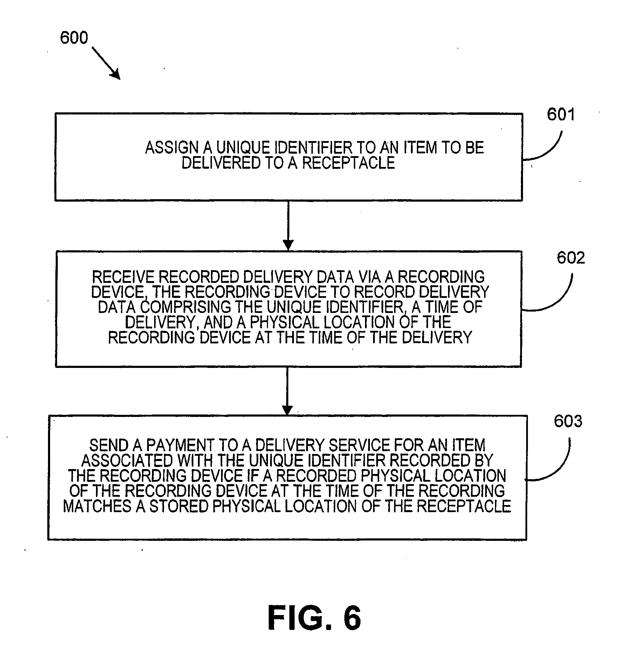

The payment and verification service 504 may compare the identifier from the scanned identification portion 502 with the stored unique identifier associated with the customer's mailbox, or the GPS coordinates recorded by the scanning device 503. If the scanned identifier matches the stored unique identifier, or the recorded GPS coordinates match the database coordinates for the location of the mailbox, then a payment may be sent to the delivery service 505 for the mail piece associated with the scanned mail piece identifier. In an alternative embodiment, the payment and verification service 504 may further confirm that destination information embedded in the unique mail piece identifier matches the receptacle identifier or that the GPS coordinates associated with the mailbox at the time the delivery match GPS coordinates associated with the scanned identifier on the mail piece. In some embodiments, payment may be sent to the delivery service only when the payment and verification service confirms that the letter was delivered to the correct location. Now referring to FIG. 6, an embodiment of a method 600 is illustrated. At 601, a unique identifier is assigned to an item to be delivered to a receptacle. At 602, recorded delivery data is received via a recording device, the recording device to record delivery data comprising the unique identifier, a time of delivery, and a physical location of the recording device at the time of the delivery. At 603 a payment is sent to a delivery service for an item associated with the unique identifier recorded by the recording device if a recorded physical location of the recording device at the time of the recording matches a stored physical location of the receptacle.

A number of embodiments of the present invention have been described. Nevertheless, it will be understood that various modifications may be made without departing from the spirit and scope of the invention. Other variations relating to implementation of the functions described herein can also be implemented. Accordingly, other embodiments are within the scope of the following claims.

## Claims

1. A method comprising:
obtaining (202) a receptacle identifier at a time of delivery of an item to the receptacle (401,501);
receiving (203) delivery data regarding delivery of the item to the receptacle (401,501), the delivery data including receptacle identifier data; and
comparing (204) the delivery data with the receptacle identifier determined at the time of delivery.

2. The method claimed in Claim 1, further comprising:
periodically changing the receptacle identifier.

3. The method claimed in Claim 1, further comprising :
periodically varying the receptacle identifier value.

4. The method of Claim 1, further comprising:
assigning (601) a unique item identifier to an item to be delivered, wherein the delivery data further includes the item identifier;
associating the variable receptacle identifier with the mail piece identifier; and sending (603) a payment to a delivery service if the receptacle identification data matches the variable receptacle identifier for the particular delivery time and matches the associated item identifier.

5. The method of Claim 4 wherein the delivery data further includes the time of delivery.

6. The method of Claim 4 further comprising:
including delivery destination information in the unique item identifier, comparing the delivery destination information to the receptacle identifier, and sending payment to a delivery service if the destination information in the item identifier matches the variable receptacle identifier at the time of delivery.

7. The method of Claim 1 wherein the receptacle is a mailbox (401,501).

8. The method of Claim 1, wherein the receptacle identification data was read from a radio frequency identification device (502) coupled to a receptacle (501).

9. The method of Claim 8, wherein the radio frequency identification device comprises an antenna and a solar power panel coupled to the mailbox.

10. The method of Claim 1, wherein the receptacle identification data is read from a variable barcode device coupled to the mailbox.
